Europäisches Patentamt

European Patent Office

Office européen des brevets

(11) Publication number: 0 609 756 A2

# EUROPEAN PATENT APPLICATION

(21) Application number: 94101077.9

(22) Date of filing: 25.01.94

(51) Int. Cl.⁵: C09D 151/00

(30) Priority: 28.01.93 US 10123

(43) Date of publication of application:
10.08.94 Bulletin 94/32

(84) Designated Contracting States:
DE FR GB IT NL

(71) Applicant: National Starch and Chemical
Investment Holding Corporation
501 Silverside Road
Wilmington, Delaware 19809(US)

(72) Inventor: Farwaha, Rajeev
59-Ashwood Crescent
Brampton, Ontario L6T 1M1(CA)
Inventor: Phan, Lien
99 Bristol Road East No.155
Mississauga, Ontario L4Z 3P4(CA)
Inventor: Currie, William
7 Bauman Street
Elmira, Ontario N3B 2G3(CA)
Inventor: Tinamisan, Judie Mae
220 Steeles Avenue West No.1210
Brampton, Ontario L6Y 2K4(CA)

(74) Representative: Hagemann, Heinrich, Dr. rer.
nat., Dipl.-Chem. et al
Patentanwälte
Hagemann & Kehl
Postfach 86 03 29
D-81630 München (DE)

(54) Latex paint formulations containing no organic solvents based on multistage polymers.

(57) A latex paint formulation containing no organic solvents comprises a multistage polymer having at least two polymer domains prepared via a multi-stage emulsion polymerization in which subsequent stage polymerizations occur in the presence of the first and succeeding stage polymer domains and in which one of the polymer domains has a glass transition temperature in the range -5° to -55°C and represents from 90% to 10% by weight of the total polymer, and the other of the polymer domains has a glass transition temperature in the range 0° to +50°C and represents from 10% to 90% by weight of the total polymer.

This invention is a latex paint formulation that contains no organic solvents and that comprises multiphase emulsion polymers synthesized from acrylic and vinyl monomers.

The properties that are desirable in paints, namely the ability to be used at a temperature low enough for application over a long seasonal range, to withstand repeated cycles of freezing and thawing, and to form a film hard enough to avoid tackiness or blocking and dirt pickup in the intended application, are enhanced in latex based formulations by the addition of coalescing solvents and anti-freeze agents. These coalescing solvents (for example, butyl carbitol acetate) and anti-freeze agents (for example, propylene glycol, ethylene glycol) are volatile organic compounds that are present in amounts up to 360g per liter of paint (3 lbs per gallon), not including water. With the universal recognition that volatile organic compounds are detrimental to the environment, there is a need for latex based paints that contain no coalescing solvents or anti-freeze agents.

Coalescing solvents are needed because the polymers used in latex paints must have the lowest possible minimum film forming temperature (MFFT) and the highest possible glass transition temperature (Tg). The minimum film forming temperature is the lowest temperature at which the polymer particles will mutually coalesce and form a continuous film when the water, which is the solvent base, evaporates. Polymers that have low MFFT extend the temperature conditions under which the paint can be applied. The Tg is the temperature at which a polymer changes from an amorphous, soft and tacky state to a glassy, hard and rigid state. Polymers with high Tg values will result in a paint coating that will be hard, resistant to abrasion, and resistant to blocking. Coalescing solvents effectively lower the Tg of the polymer to meet the desired low MFFT on application, and then eventually diffuse out of the paint and evaporate leaving a high Tg film. Anti-freeze agents are added to paint formulations simply to impart freeze-thaw stability.

Many factors, such as the chemical composition, molecular structure, and particle morphology of the polymer, contribute to the polymer characteristics measured by the Tg and MFFT indices. Thus, it is known that the manipulation of these factors is critical for obtaining a workable latex paint. In practice, in addition to formulation with coalescing solvents and anti-freeze agents, one general solution in paint formulations to the problem of obtaining the lowest MFFT possible while still using a high Tg polymer is to formulate with a multistage polymer. These polymers typically will have a hard (high $T_g$) core, which will form a hard film on drying, and a soft (low Tg) shell, which will contribute to a low MFFT and the ability of the polymer to form a film at low temperatures. The art describes the use of multistage polymers for this purpose; however, it appears that these formulations described in the art still contain coalescing solvents and anti-freeze agents.

United States patent 4,455,402 describes the synthesis of two-stage polymers in the presence of coalescing aids to give coatings with low MFFT values. United States patent 5,021,469 discloses the synthesis of multiphase latex particles for gloss paints that are formulated in the presence of a coalescent. United States patent 4,654,397 discusses the synthesis of a two-stage latex particle, i.e. soft first stage/hard second stage, to give a coating binder that is formulated in a solvented paint, which gives good block resistance. United States patent 4,263,193 describes the methods of synthesizing a resin of styrene acrylic (1st stage) and ethylene vinyl acetate (2nd stage) having superior film forming properties, which when used in paint formulas containing hexylene glycol, result in good block resistance.

Due to ever increasing governmental restrictions on volatile organic emissions, there remains a need for a latex paint formulation that has a low MFFT, but that has good blocking resistance, abrasion resistance, and freeze-thaw stability, and that can be formulated without the need of coalescing solvents or anti-freeze agents.

This invention is an aqueous based paint formulation containing no organic solvents that comprises a multi-stage polymer having a polymer domain with a low Tg and a polymer domain with a high $T_g$, in which the polymer is prepared from acrylic or vinyl containing monomers.

The polymer particles of the latex of this invention are broadly characterized as multi-stage polymers having a soft (low Tg) polymer domain and a hard (high Tg) polymer domain, which are prepared via a multi-stage emulsion polymerization in which subsequent stage polymerizations occur in the presence of the first and succeeding stage polymer domains. Generally, the polymerizations are two-stage polymerizations in which either stage can produce the soft or hard polymer domain. As measured by standard differential scanning calorimetric methods, the soft polymer domain will have a $T_g$ in the range of -5° to -55°C; the hard polymer domain will have a Tg in the range of 0° to +50°C. Preferably, there will be a difference in the Tg values between the two stages of about 10° to 50°C.

The size of the polymer particles can vary; however, for optimum coating characteristics, it is preferable that the particles have an average diameter of less than 350 nanometers. In general, for the polymer of this invention, the smaller the average particle size, the more water resistant the polymer.

The soft polymer domain will represent from 90% to 10% by weight, and preferably from 80% to 10%, of the total polymer. The hard polymer domain will represent from 10% to 90% by weight, and preferably from 20% to 90%, of the total polymer.

Both the soft and hard polymer domains are prepared either as homopolymers or as copolymers from vinyl or acrylic containing monomers or combinations of vinyl and acrylic monomers. The particular choice of monomers for either domain will depend on the desired Tg range for the domain. The Tg of the polymer stages can be calculated using the Fox equation:

$$1/Tg \text{ (polymer)} = W_{(a)}/Tg_{(a)} + W_{(b)}/Tg_{(b)} + ...,$$

where W(a) and W(b) are the weight fractions of comonomers (a) and (b) and $Tg_{(a)}$ and $Tg_{(b)}$ are the glass transition temperatures for homopolymers (a) and (b), respectively. Glass transition temperatures for various homopolymers are available in many literature sources, including J. Brandup and E.H. Immergut, *Polymer Handbook*, 2nd ed., John Wiley & Sons, New York, pp 139-192 (1975).

Suitable monomers include the $C_1$-$C_4$ alkyl esters of acrylic and methacrylic acid; vinyl esters of linear and branched carboxylic acids having 1 to 25 carbon atoms, preferably 2 to 20 carbon atoms, such as, vinyl acetate, vinyl propionate, vinyl butyrate, vinyl valerate, vinyl 2-ethylhexylacrylate, vinyl isononanoate, vinyl laurate, vinyl stearate, vinyl versatate; and styrene and styrene derivatives, such as, alpha-methylstyrene, 2-chlorostyrene, 4-chlorostyrene, 2,5-dichlorostyrene and 4-methoxystyrene. The preferred monomers are methyl acrylate, ethyl acrylate, butyl acrylate, 2-ethylhexyl acrylate, decyl acrylate, methyl methacrylate, ethyl methacrylate, vinyl acetate, vinyl versatate, ethylene, vinyl chloride, styrene and substituted styrene.

In order to optimize the wet adhesion of the ultimate paint formulation, either one or the other, or both the soft and hard polymer domains, may comprise a wet adhesion monomer, or a combination of wet adhesion monomers. These monomers are well known in the art and include aminoethyl acrylate and methacrylate, dimethylaminopropyl acrylate and methacrylate, 3-dimethylamino-2,2-dimethylpropyl-1-acrylate and methacrylate, 2-N-morpholinoethyl acrylate and methacrylate, 2-N-piperidinoethyl acrylate and methacrylate, N-(3-dimethylaminopropyl) acrylamide and methacrylamide, N-(3-dimethylamino-2, 2-dimethylpropyl) acrylamide and methacrylamide, N-dimethylaminomethyl acrylamide and methacrylamide, N-dimethylaminomethyl acrylamide and methacrylamide, N-(4-morpholino-methyl) acrylamide and methacrylamide, vinylimidazole, vinylpyrrolidone, N-(2-methacryloyloxyethyl) ethylene urea, N-(2-methacryloxyacetamidoethyl)-N,N'-ethyleneurea, allylalkyl ethylene urea, N-methacrylamidomethyl urea, N-methacryoyl urea, N-[3-(1,3-diazacyclohexan)-2-on-propyl] methyacrylamide, 2-(1-imidazolyl) ethyl methacrylate, 2-(1-imidazolidin-2-on)ethylmethacrylate, N-(methacrylamido)ethyl ethylene urea (DV 2422, Rhone Poulenc) and allyl ureido wet adhesion monomer (Sipomer WAM®, Rhone Poulenc). The wet adhesion monomers will be present in the soft or hard polymer domain preferably in an amount from 0.2% to 2.0% by weight of the total polymer.

To prevent mixing between the two polymer domains and improve the block resistance of the paint formulations, either or both of the domains will comprise a low level of a multifunctional crosslinking monomer having two or more polymerizable carbon-carbon double bonds per molecule, such as vinyl or allyl acrylate or methacrylate, diol multifunctional acrylates and methacrylates, and methylene-bis-acrylamide. The multifunctional monomer will be present in an amount from 0.01% to 5% by weight of the total polymer.

Carboxylic acid monomers are known to give mechanical stability and colloidal stability to latex particles. Ordinarily, paint formulations contain significant amounts of antifreeze agents (ethylene glycol, propylene glycol), at approximately 5% to 10% by weight (on binder). The copolymerization of a low level of carboxylic acid monomers on the polymer backbone eliminates the need of freeze-thaw additives. For example, the utilization of 0.2% to 4%, preferably about 0.5% to 2.0%, by weight of carboxylic acid as an unsaturated carboxyl component results in the latex produced being capable of withstanding more than five freeze-thaw cycles. Higher levels of acid monomers increase the water sensitivity of the coating, and hence are undesirable. Examples of suitable carboxylic acid monomers are the $C_3$ - $C_6$ monocarboxylic acids, such as, methacrylic acid, acrylic acid, mono-methylmaleate, and mono-ethylmaleate, and $C_4$ - $C_6$ dicarboxylic acids, such as fumaric acid, maleic acid, and itaconic acid.

In a typical two stage process, the monomers for either the hard or soft polymer domain are emulsion polymerized in situ to an average particle size of 50-150 nanometers, after which the monomer charge for the alternate polymer domain is introduced into the polymerization medium and polymerized in the presence of the first domain polymer particles to the desired average particle size of less than 350 nanometers.

The polymerization of the first polymer domain can be accomplished by known procedures for polymerization in aqueous emulsion. Optionally, conventional seeding procedures are employed to aid in controlling polymerization to achieve the desired average particle size and particle size distribution for the first polymer domain particles. A polymer seed typically is employed in amounts corresponding to about 0.1% to 4% by weight of the total polymer, and ranges in size from about 20% to 60% of the diameter of the first polymer domain particles to be formed. The seed latex can constitute a previously prepared latex or polymer powder, or it can be prepared in situ. The monomeric composition of the seed latex can vary; however, it is preferable that it be substantially the same as that of the first polymer domain particles.

The monomer or comonomers, and the optional seed, to be employed in the preparation of the first domain polymer particles are dispersed into water with agitation sufficient to emulsify the mixture. The aqueous medium may also contain a free radical polymerization catalyst, an emulsifying agent (i.e., surfactant), or other ingredients that are known and conventionally employed in the art as emulsion polymerization aids.

Suitable free radical polymerization catalysts are the catalysts known to promote emulsion polymerization and include water-soluble oxidizing agents, such as, organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those catalysts that are activated in the water phase by a water-soluble reducing agent. Such catalysts are employed in a catalytic amount sufficient to cause polymerization. As a general rule, a catalytic amount ranges from about 0.01% to 5% by weight based upon the total monomers to be polymerized. As alternatives to heat or catalytic compounds to activate the polymerization, other free radical producing means, such as exposure to activating radiations, can be employed.

Suitable emulsifying agents include anionic, cationic, and nonionic emulsifiers customarily used in emulsion polymerization. Usually, at least one anionic emulsifier is utilized and one or more nonionic emulsifiers may also be utilized. Representative anionic emulsifiers are the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl disodium sulfosuccinate and dioctyl sodium sulfosuccinate. The emulsifying agents are employed in amounts to achieve adequate emulsification and to provide desired particle size and particle size distribution.

Other ingredients known in the art to be useful for various specific purposes in emulsion polymerization, such as, acids, salts, chain transfer agents, and chelating agents, can also be employed in the preparation of the polymer. For example, if the polymerizable constituents include a monoethylenically unsaturated carboxylic acid comonomer, polymerization under acidic conditions (pH 2-7, preferably 2-5) is preferred. In such instances, the aqueous medium can include those known weak acids and their salts that are commonly used to provide a buffered system at the desired pH range. If a monoethylenically unsaturated carboxylic acid monomer is not employed, the pH of the aqueous medium may range from about 2 to about 10.

The manner of combining the polymerization ingredients can be by various known monomer feed methods, such as, continuous monomer addition, incremental monomer addition, or addition in a single charge of the entire amount of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

Polymerization to form the first polymer domain particles is generally initiated by heating the emulsified mixture with continued agitation to a temperature usually between about $50° - 110°C$, preferably between $60° - 100°C$. Polymerization is continued by maintaining the emulsified mixture at the selected temperature until conversion of the monomer or monomers to polymer has been reached.

Following the polymerization to form the first domain polymer particles, the latex may be filtered to remove any precoagulum and then stabilized to storage (pending subsequent use as the dispersed first domain particles in the second stage polymerization) by the addition of a small amount of known stabilizer surfactant. Preferably, the filtering and intermediate stabilization steps for the first polymer latex are eliminated by proceeding directly to the polymerization of the monomers for the second polymer domain. The monomers for the second polymer domain are dispersed with agitation into the aqueous medium containing the first polymer domain particles and polymerized with continued agitation in generally the same manner and with the same optional polymerization aids as described for the preparation of the first polymer domain particles. It is preferable in the formation of the second polymer domain to employ a conventional chain transfer agent, such as, bromoform, carbon tetrachloride, a long chain mercaptan (e.g., lauryl mercaptan, dodecyl mercaptan, etc.), or other known chain transfer agents in conventional amounts from about 0.1% to 3.0% by weight based on the total monomer charge.

4

Following polymerization, the solids content of the resulting aqueous heterogeneous polymer latex can be adjusted to the level desired by the addition of water or by the removal of water by distillation. Generally, the desired level of polymeric solids content is from about 20%-65%, preferably from about 45%-60% by weight on a total weight basis.

Suitable particle sizes can generally be achieved directly from the polymerization. However, screening of the resulting latex to remove particles outside the desired size range and to thus narrow the particle size distribution may be employed.

For various applications, it is sometimes desirable to have small amounts of additives, such as, surfactants, bacteriocides (e.g., formaldehyde), pH modifiers, and antifoamers, incorporated in the latex, and this may be done in a conventional manner and at any convenient point in the preparation of the latexes.

**Examples**

The following examples describe the preparation of two-stage latexes for use in paint formulations that contain no volatile organic compounds; the paint formulations containing the latexes; the preparation of comparative latexes and paint formulations containing the comparative latexes; the procedures for testing the paint formulations for the properties of low temperature film formation, block resistance, and scrubability: and comparisons of the test results between the inventive examples and the comparative examples.

**Test Procedures**

Blocking Resistance: Films (6 mil) (1 mil = 25 microns) were cast over leneta 3-B Opacity charts and allowed to dry at constant temperature and humidity (22°C and 40-60% relative humidity) for 1, 2, 3 and 7 days. Two pieces of the coated charts were placed face-to-face and subjected to 0.070 kg/cm$^2$ (1 psi) pressure for 1 day at a constant temperature of 22°C and 40-60% relative humidity. An additional two pieces of the chart were subjected to 0.070 kg/cm$^2$ (1 psi) in a 35°C oven for 30 minutes. Blocking resistance is determined visually when the panels were pulled apart with manual force and rated as follows:

| Blocking Resistance | |
| --- | --- |
| Numerical Rating | Type of Separation |
| 10 | no tack |
| 9 | trace tack |
| 8 | very slight tack |
| 7 | very slight to slight tack |
| 6 | slight tack |
| 5 | moderate tack |
| 4 | very tacky |
| 3 | film ruptures 5-25% when pulled apart |
| 2 | film ruptures 25-50% when pulled apart |
| 1 | film ruptures 50-75% when pulled apart |
| 0 | film ruptures 75-100% when pulled apart |

Low Temperature Film Formation: The paint was conditioned in a 2°-5°C refrigerator for 1 hour, and a 3 mil film of the paint then applied over a 19 BR leneta chart. The film was allowed to dry overnight at 2°-5°C and visually examined for signs of cracking. A paint was deemed to form film acceptably when no difference could be seen between the film applied at 5°C and a film applied at room temperature (22°C).

Abrasion Resistance (Scrubability): A test scrub panel was prepared by drawing down a 3 mil film of paint on a leneta chart and allowing the paint to dry for 48 hours. The dried chart was affixed to a glass panel and put into a scrub machine equipped with a scrub brush and a basin for holding the test panel. The brush was prepared by immersing it in plain water for 15 minutes and in a scrubbing solution of 20% abrasive soap (Lava®) for 1/2 hour. The brush was placed in the machine holder and the test scrub panel was put under the brush. The scrub machine was started and the panel kept wet with the scrubbing solution. The number of strokes to the point at which 1/2" of black chart shows through the test panel was recorded.

Wet Adhesion: Scrub panels were prepared by drawing down a semi-gloss alkyd base (chosen as being the most difficult test for wet adhesion) into a 3 mil film onto a leneta chart. The charts were aged at least one week at room temperature. The test latexes were then drawn down into a 3 mil film onto the aged alkyd surface and allowed to dry for 48 hours. The dried charts were affixed to glass panels and put into the scrub machine equipped with a scrub brush and a basin for holding the test panel. The brush was conditioned by immersing it in warm water for 30 minutes and then placed in the machine holder. The test panel was placed in the basin under the brush and 200 gm of warm (50°C) water were added to the basin. The scrub machine was started and run for 400 strokes. If the coating remained intact, 8 gm of a dry abrasive (Ajax®) were placed under the brush and the machine run for another 100 strokes. The last step was repeated until the coating failed, that is, when the test paint stripped from the alkyd base. The number of strokes to failure was recorded.

**Composition of Paint Screening Formulations**

It should be noted that pigments or fillers present in the paint formulation result in hardness in the deposited paint film. The relationship between hardness of the film and the amount of pigment is represented by the pigment volume concentration (PVC), which is the fractional volume of pigment in a unit volume of resin. Thus, low PVC coaings compositions contain relatively low levels of pigment, and high PVC coating compositions contain high levels of pigment. In low PVC paints, the hardness of the coating is determined mainly by the Tg of the latex. In high PVC paints, extender pigments mainly determine the coating hardness. Latexes in low PVC paints require more coalescing aid than high PVC paints for film-formation and the development of ultimate hardness. If in these systems, the amount of film formation assistant is reduced, the film characteristics and durability of the paint are drastically reduced.

The following are the paint formulations used to test the multistage latexes.

The following examples describe the preparation, composition and properties of various two-stage latexes. The particle sizes of the latexes were determined by a BI-90 particle size analyzer (from Brookhaven Instruments).

**Example I: Two-Stage All-Acrylic Latexes (Soft 1st Stage/Hard 2nd Stage)**

A series of two-stage all-acrylic (methyl methacrylate/butyl acrylate/methacrylic acid) latexes containing a standard wet adhesion monomer, DV 2422 (a product of Rhone Poulenc) using an anionic surfactant,

**Paint Screening Formulas**
**(Composition in Grams)**

| Semi-Gloss I | | Silk II | | Satin III | |
|---|---|---|---|---|---|
| Compounds | Grams | Compounds | Grams | Compounds | Grams |
| Water | 210.0 | Water | 240.0 | Water | 428. |
| BYK 156 Dispersant | 2.0 | Natrosol 250 HR | 3.6 | BYK 156 Dispersant | 2.0 |
| BYK 034 Defoamer | 2.0 | Drew L-475 | 3.0 | BYK 034 Defoamer | 2.0 |
| Natrosol 250 HR | 3.0 | BYK 156 | 3.0 | Natrosol 250 HR | 5.4 |
| Titanox 2020 | 300.0 | Tioxide RTC-90 | 320.0 | Satintone W | 72.0 |
| Verwhite | 50.0 | ASP-170 | 40.0 | Titanox 2020 | 200.0 |
| Disperse 5 - 6 Hegman | | Disperse 2 - 3 Hegman | | Omya 6 | 170.0 |
| Water | 165.7 | Water | 139.5 | Celite 281 | 24.0 |
| Rexol 25/9 | 3.0 | Latex | 375.5 | Disperse 2 - 3 Hegman | |
| Latex | 629.3 | Rexol 45/407 | 2.0 | Water | 49.8 |
| Acrysol RM 2020 | 20.0 | Acrysol RM-2020 | 20.6 | Latex | 370.2 |
| Kanthon LX | 0.5 | Kathon LX | 0.5 | Igepal CO-630 | 3.0 |
| | 1388.5 | | 1147.7 | Acrysol RM 2020 | 20.0 |
| | | | | Kathon LX | 0.5 |
| | | | | | 1346.9 |

1.  BYK 156 Dispersant is a proprietary mixture.
2.  BYK 034 Defoamer is a proprietary mixture.
3.  Natrosol 250 HR is hydroxy ethyl cellulose.
4.  Titanox 2020 or Tioxide RTC-90 is rutile titanium dioxide.
5.  Verwhite is calcium carbonate pigment.
6.  Rexol 25.9 is an ethoxylated nonyl phenol surfactant containing 9-10 mole ethylene oxide. Rexol 45/407 is an ethoxylated octyl phenol surfactant containing 40 moles ethylene oxide.
7.  Acrysol RM-2020 is a water based solvent-free polyurethane rheology modifier.
8.  Kathon LX is a microbiocide having as active ingredients 5-chlor-2-methyl-4-isothiazolin-3-one and 2-methyl-4-isothiazolin-3-one present in an amount up to 14%.
9.  Drew L-475 is a defoamer prepared from a blend of mineral oils and silica derivatives containing 100% active material
10. ASP-170 is an aluminum silicate pigment.
11. Hegman is a unit of grind used in the industry.

Alipal® EP-110 (a product of Rhone Poulenc), and a nonionic surfactant, Igepal® CA-897 (a product of Rhone Poulenc) were prepared according to the following procedure. The ingredients for one of the latexes that were prepared were as follows. The concentration is reported in parts per hundred monomer.

| Initial Charge | | |
|---|---|---|
| Compound | Grams | Concentration in pphm |
| Water | 395.97 | 55.3 |
| Alipal EP-110 | 6.0 | 0.84 |
| Drew L-475 | 0.3 | 0.04 |

| First-Stage Monomer Mix | | |
|---|---|---|
| Compound | Grams | Concentration in pphm |
| $H_2O$ | 11.74 | 15.6 |
| Alipal EP-110 | 12.8 | 1.79 |
| Igepal CA 897 | 16.7 | 2.3 |
| Methacrylic Acid (MAA) | 3.6 | 0.50 |
| Methyl Methacrylate (MMA) | 89.45 | 12.5 |
| Butyl Acrylate (BA) | 268.36 | 37.5 |

| Second-Stage Monomer Mix | | |
|---|---|---|
| Compound | Grams | Concentration in pphm |
| $H_2O$ | 111.74 | 15.6 |
| Alipal EP-110 | 12.8 | 1.79 |
| Igepal CA 897 | 16.7 | 2.3 |
| Methacrylic Acid (MAA) | 3.0 | 0.4 |
| DV 2422 | 8.7 | 1.2 |
| Butyl Acrylate (BA) | 143.1 | 20.0 |
| Allyl Methacrylate (AM) | 3.6 | 0.5 |

| Catalyst Solution | | |
|---|---|---|
| Compound | Grams | Concentration in pphm |
| Ammonium Persulfate | 4.47 | 0.6 |
| $H_2O$ | 39.07 | 5.46 |

In a 3-liter reaction vessel, equipped with a reflux condenser, addition funnels, and stirrer, an initial charge of water, anionic surfactant and defoamer, was mildly agitated and heated to 78°C. A 52.0gm portion of the first-stage monomer mix and 7.0 gm of the catalyst solution were then charged to the reaction vessel and the reaction mix held for 20 minutes at the same temperature. The remainder of the first-stage monomer mix was metered into the reaction over the course of 2 hours. At the completion of the first-stage addition, the reaction was again held for 20 minutes at 78°C, and then the addition of the second-stage monomer mix was begun and metered into the reaction over the course of 1 hour, 40 minutes. At the completion of the second-stage addition, the reaction was held for 20 minutes at 78°C, and then allowed to cool to room temperature. As the reaction mix was cooling, 0.5 gm of hydrogen peroxide and 0.2 gm of isoascorbic acid were added when the temperature reached 65°C. The pH of the resultant emulsion was adjusted to 8.0 by the addition of 26.6% aqueous ammonium hydroxide solution.

The resulting latex was designated 1C and had the following physical properties: 51.5% solids; 150 nm particle size; 222 mPas (cps) viscosity; and pH 8.0.

A series of polymer emulsions, designated 1A, 1B, 1D, and 1E, was prepared essentially following the above procedure. Each of the above examples 1A - 1E were drawn down into a 3 mil film on glass and allowed to dry overnight at 2°-5°C, after which they were manually tested for tackiness and visually tested for cracking. The latex properties and composition are set out in Table 1.

**Table I**
**Composition and Properties of All Acrylic Latexes**
**(Soft First Stage/Hard Second Stage)**

| Latex | 1A | 1B | 1C | 1D | 1E |
|---|---|---|---|---|---|
| **Soft 1st stage, wt %** | 75 | 75 | 50 | 60 | 10 |
| Tg (°C)[a] | -17.0 | -7.9 | -29.2 | -10.6 | -50 |
| Particle size (nm) | 126 | 142 | 130 | 120 | 61 |
| MMA/BA[b] | 26.3/48.7 | 31.5/43.5 | 12.5/37.5 | 24/36 | 9.5/0.5 |
| **Hard 2nd stage, wt %** | 25 | 25 | 50 | 40 | 90 |
| Tg (°C)[a] | 19.2 | 3.5 | 19.2 | 6.5 | 6.5 |
| Particle size (nm) | 146 | 146 | 150 | 148 | 154 |
| MMA/BA[b] | 15/10 | 12.5/12.5 | 30/20 | 20.8/19.2 | 46.8/43.2 |
| **Polymer Tg (°C)[a]** | -7.95 | -5.2 | -5.0 | -3.76 | 0.85 |
| % Solids | 52.4 | 51.8 | 51.5 | 52.4 | 51.9 |
| Particle Size (nm) | 146 | 146 | 150 | 150 | 154 |
| DSC Tg (°C) | -17, 8.0 & 17.9 | 5.3 | -17, 7.8 & 26.5 | -17, 7.97 & 17.39 | 12.5 & 39 |
| **Film on Glass** | tack | trace tack | no tack | no tack | no tack |
| **Film Formation < 5°C, cracking** | none | none | none | none | few cracks |

[a] Calculated by the Fox equation.
[b] MMA is methyl methacrylate; BA is butyl acrylate.

9

**Example II: Homogeneous All-Acrylic Latex**

A one-stage all-acrylic latex of the same monomer composition as latex 1C was made by a homogeneous emulsion polymerization instead of a two-stage polymerization. The resulting latex was designated 1F and had the following physical properties: 51.1% solids; 145 nm particle size; and pH 8.0.

**Example III: All-Acrylic Latex for Formulation with Coalescing Aid**

A one-stage all-acrylic latex was prepared by a standard semi-continuous polymerization technique, following the procedure and surfactant system of Example 1 with a monomer composition of 52 parts methylmethacrylate (MMA) and 48 parts butyl acrylate (BA). The resulting latex was designated 1G and had the following physical properties: 51.1% solids; 230 mPas (cps) viscosity; 16.0 °C Tg; 158 nm particle size; and pH 8.0.

**Example IV: Test Results for All-Acrylic Latexes in Paint Formulations**

The above latexes 1A - 1E were formulated into paint compositions containing no volatile organic compounds and compared with latex 1F, a composition containing latex 1G and a coalescing agent, and a commercial paint, for the properties of low temperature film formation, and blocking resistance. The results are set out in Table 2 and show that the block resistance of two-stage latex 1C is superior to that of the homogeneous latex 1F and comparable to that of the coalesced all-acrylic 1G and commercial semi-gloss paint 1H.

The paint properties of the two-stage all-acrylic latex 1C of Example 1 were compared to coalesced all-acrylic latex 1G of Example III. The results are set out in Table 3 and show that the two-stage latex is comparable to the paint with coalescing aid in film formation and freeze-thaw stability, and superior in abrasion resistance and wet adhesion.

**Table 2**
**Composition and Properties of Paint Formulations**

| Latex | 1A | 1B | 1C | 1D | 1E | 1F[a] | 1G[b] | 1G[c] | 1H[d] |
|---|---|---|---|---|---|---|---|---|---|
| | | | 2-stage polymerization | | | | | | |
| **Semi-gloss Paint Formula I** Film on Glass | tack | trace tack | no tack | no tack | trace tack | trace tack | | no tack | no tack |
| Film formation < 5°C, cracking | none | none | none | none | few cracks | orange peel but no crack | no film formation | none | none |
| Block Resistance 1 PSI | | | | | | | | | |
| 1 day at RT & 40-60% RH after curing 1 day | 0 | 0 | 3 | 3 | 3 | 0 | -- | 2 | 2 |
| 2 days | 0 | 0 | 3 | 3 | 3 | 0 | | 2 | 2 |
| 3 days | 2 | 1 | 3 | 3 | 3 | 0 | | 2 | 2 |
| 7 days | 0 | 1 | 6 | 3 | 5 | 0 | | 3 | 3 |
| 30 minutes @ 35°C after curing 7 days | 0 | 1 | 4 | 3 | 5 | 0 | | 5 | 5 |
| **Paint Silk Formula II** Film on Glass | no tack | no tack | no tack | no tack | no tack | no tack | | no tack | no tack |
| Film Formation < 5°C, cracking | none | none | none | none | none | none | | none | none |
| Block Resistance 1 PSI | | | | | | | | | |
| 1 day @ RT & 40-60% RH after curing 1 day | | | 9 | 7 | | 7 | | 9 | |
| 7 days | | | 9 | 8 | | 7 | | 9 | |
| 30 minutes at @ 35°C after curing 7 days | | | 9 | 9 | | 7 | | 9 | |

[a] A homogeneous composition of 2-stage Latex 1C 42.5 MMA/57,5 BA.
[b] Homogenous all acrylic latex 1G: 52 MMA/48 BA without coalescing aid.
[c] Homogenous all acrylic latex 1G: 52 MMA/48 BA coalesced with 6% Texanol, a product of Eastman Kodak.
[d] Commercial semi-gloss paint containing coalescing aid.

Table 3

| Test Results of Paint Formulations | | |
|---|---|---|
| Paint Semi-Gloss Formula I | Latex 1C | Latex 1G |
| % Coalescent | 0 | 6% Texanol |
| Gloss (60°C) (3 days @ RT) | 26 | 24 |
| Film Formation below 5°C | smooth & no tack | smooth |
| Abrasion resistance (scrubs to failure) 3 days air dried | 986 | 716 |
| Freeze thaw stability | pass 5 cycles | pass 5 cycles |
| Wet Adhesion (scrubs to failure) 4.5 days air dried | 3400 | 2600 |

**Example V: Two-Stage All-Acrylic Latexes (Hard 1st Stage/Soft 2nd Stage)**

A two-stage all-acrylic (methyl methacrylate, butyl acrylate, and methacrylic acid) latex was prepared following the procedure and surfactant system described in Example I, except that the first stage monomer composition was 33.8 MMA/31.2 BA/0.65 MAA and the second stage composition was 11.2 MMA/23.8 BA/0.35 MAA. The latex was designated 2A and had the following physical properties: 52.8% solids; pH 8.0; 163 nm particle size.

**Example VI: Homogeneous Copolymer**

A one-stage all-acrylic latex of the same monomer composition as latex 2A was made by a homogeneous emulsion polymerization using the same surfactant system of the two-stage polymerization of Example I. The resulting latex was designated 2B and had the following physical properties: 51.2% solids; pH 8.0; and 140 nm particle size.

**Example VII: Test Results for Hard 1st Stage/Soft 2nd Stage All-Acrylic Latexes in Paint Formulations**

Latexes 2A and 2B were formulated into paint screening formula I and tested for block resistance and low temperature film forming properties. The results are set out in Table 4 and show that the two-stage latex performed better than the homogeneous latexes and comparably to the formulations containing coalescent solvent.

**Table 4**
**Composition and Properties of All-Acrylic Latexes**
**Hard 1st stage/Soft 2nd stage**

| Latex | 2A[a] | 2B[b] | 1G[c] | 1G[d] | 1H[e] |
|---|---|---|---|---|---|
| **Semi-Gloss Paint Formula I** | | | | | |
| Film on Glass | no tack | no tack | | no tack | no tack |
| Film formation < 5°C cracking | no cracking | orange peel but no crack | no film formation | no cracking | no cracking |
| Block Resistance 1 PSI | | | | | |
| 1 day @ RT & 40-60% RH after curing 1 day | 3 | 0 | | 3 | 3 |
| 30 min @ 35°C after curing 7 days | 5 | 0 | | 5 | 5 |

a  Two domain composition.
b  Homogeneous composition of latex 2A 45 MMA/55 BA/1 MMA.
c  All acrylic latex 1G with no coalescing aid.
d  All acrylic latex 1G with 6% coalescing aid.
e  Commercial semi-gloss paint with coalescing aid.

**Example VIII: Two-stage Styrene-Acrylic Latex**

A series of two-stage styrene/methyl methacrylate/butyl acrylate latexes were prepared using the polymerization procedure and surfactant system of Example I. The latexes were designated 3A, 3B, and 3C.

The latex compositions and properties are shown in Table 5.

**Example IX: Homogeneous Styrene-Acrylic Latex**

A homogeneous styrene/methyl methacrylate/butyl acrylate terpolymer latex was synthesized using the procedure and surfactant system in Example I, except that a single stage pre-emulsion feed was used. The monomer composition was the same as latex 3B. The resulting latex was designated 3D and had the following properties: 53.0% solids; 219 nm particle size; pH 8.0; 0.006% grits (200M). The physical properties are set out in Table 5.

**Example X: Styrene-Acrylic Latex for Formulating with Coalescing Aid**

A styrene/acrylic latex was synthesized employing a single stage pre-emulsion feed. The resulting latex had a monomer composition of styrene 54.4/butyl acrylate 45.6 and was designated 3E. It had the following properties: 53% solids 53; pH 8.0; 175 nm particle size; 0.0032% grits (200M); and Tg 20.4°C.

14

**Table 5**

**Composition and Properties of Styrene-Acrylic Latexes**

| Latex | 3A | 3B | 3C | 3D[a] |
|---|---|---|---|---|
| **Hard 1st stage/wt %** | 10 | 30 | 90 | 90 |
| Tg (°C)[b] | 50 | 33.8 | 2.17 | |
| Particle size (nm) | 92 | 111 | 128 | |
| St/MMA/BA | 3.9/3.8/2.3 | 12/9.3/8.7 | 18/26.6/45.4 | |
| **Soft 2nd stage/wt %** | 90 | 70 | 10 | |
| Tg (°C)[b] | -13.2 | -20.8 | -20.8 | |
| Particle size (nm) | 145 | 143 | 151 | |
| MMA/BA | 34.2/55.8 | 22.4/47.6 | 3.2/6.8 | |
| **Polymer** Tg (°C)[b] | -6.7 | -4.0 | -0.13 | -4.0 |
| % Solids | 53.0 | 52.0 | 52.3 | 53 |
| Particle size (nm) | 151 | 148 | 156 | 219 |
| DSC Tg (°C) | -5.6/17.9 | -9.7/11.3 | 10.3/14.4 | 1.5 |
| Film on Glass | trace tack | no tack | no tack | slight tack |
| Film Formation < 5°C, cracking | none | none | none | none |

[a] Homogeneous composition of 3B.
[b] Calculated by the Fox equation.

**Example XI: Test Results for Styrene/Acrylic Latexes in Paint Formulations**

Latexes 3A - 3E were formulated into paint screening formulas I and II and tested for block resistance and low temperature film-forming characteristics. The results are shown in Table 6 and show that the two-stage styrene/acrylic latex 3B gives comparable film-forming properties and superior block resistance to the coalesced sample 3E.

The paint properties of the two-stage styrene/acrylic latex 3B were compared to the coalesced stryene/acrylic polymer 3E. The results are set out in Table 7 and show that the two-stage latex is overall comparable to a styrene/acrylic latex formulated with a coalescing solvent.

**Table 6**
**Composition and Properties of Paint Formulations Containing Styrene-Acrylic Latexes**

| Latex | 3A | 3B | 3C | 3D[a] | 3E[b] |
|---|---|---|---|---|---|
| | | 2-stage polymerization | | | |
| **Semi-Gloss Paint Formula I** | | | | | |
| Film on Glass | slight tack | no tack | no tack | slight tack | no tack |
| Film formation < 5°C, cracking | none | none | few | none | none |
| Block Resistance 1 PSI | | | | | |
| 1 day @ RT & 40-60% RH after curing 1 day | 0 | 3 | 5 | 3 | 0 |
| 2 days | 0 | 3 | 7 | 4 | 0 |
| 3 days | 0 | 3 | 7 | 0 | 1 |
| 7 days | 2 | 4 | 8 | 0 | 3 |
| 30 minutes @ 35°C after curing 7 days | 0 | 4 | 7 | 0 | 3 |
| **Silk Paint Formula II** | | | | | |
| Film Formation < 5 °C, cracking | no tack | no tack | no tack | slight tack | no tack |
| | none | none | none | none | none |
| Block Resistance 1 PSI | | | | | |
| 1 day @ RT & 40-60% RH after curing 1 day | | 6 | 6 | 3 | |
| 7 days | | 8 | 8 | 4 | |
| 30 minutes @ 35°C after curing 7 days | | 6 | 8 | 4 | |

a Homogeneous composition of latex 3B
b Styrene-Acrylic Latex with 6% Texanol

Table 7

| Test Results of Paint Formulations | | |
| --- | --- | --- |
| **Semi-Gloss Paint Formula I** | **Latex 3B** | **Latex 3E** |
| % Coalescent | 0% | 6% Texanol |
| Gloss (60°) 24 hrs | 37.0 | 30.4 |
| Film Formation (<5°C) | smooth, no cracking | fine cracking |
| Block Resistance 1 PSI 1 day at RT & 40-60% RH after curing 7 days | 4 | 3 |
| 30 minutes @ 35°C after curing 7 days | 4 | 3 |
| Lava Scrubs (scrubs to failure) | 1400 | 1944 |
| Wet adhesion (scrubs to failure) | 3900 | 4000 |
| Freeze thaw stability | pass 5 cycles | pass 5 cycles |

**Example XII: Two-Stage Vinyl Ester Terpolymer Latexes**

A series of two-stage vinyl ester copolymers designated 4A - 4C was prepared according to the procedure and with the surfactant system of Example I. The latex properties and composition are set out in Table 8.

**Example XIII: Homogeneous Vinyl Ester Latex**

A one-stage vinyl ester latex with homogeneous composition was prepared with the monomer composition and surfactant system of latex 4B. The resulting latex was designated 4D and had the following properties: 56.0% solids; 234 nm particle size; and pH 8.0.

**Table 8**
**Composition and Properties of Vinyl Ester Latexes**

| Latex | 4A | 4B | 4C |
|---|---|---|---|
| **1st stage** | | | |
| wt % | soft 50 | soft 50 | hard 50 |
| Tg (°C)[a] | -16.8 | -23 | 17.3 |
| Particle size (nm) | 142 | 128 | 131 |
| Monomer Compositions | VA/BA/VV-10[b] 10/17.5/22.5 | VA/V2E-H[b] 20/30 | VA/BA/VV-10[b] 37/5/8 |
| **2nd stage** | | | |
| wt % | hard 50 | hard 50 | soft 50 |
| Tg (°C)[a] | 17 | 18.1 | -3.6 |
| Particle size (nm) | 288 | 237 | 241 |
| Monomer Compositions | (VA/BA)[b] 43.5/6.5 | (VA/BA)[b] 44.0/6.0 | (VA/BA)[b] 44.0/6.0 |
| **Polymer** | | | |
| Tg (°C)[a] | 0.16 | -5.1 | 6.8 |
| % Solids | 54.2 | 55.4 | 54.5 |
| Particle size (nm) | 288 | 237 | 241 |
| DSC Tg (°C) | 12.5 & 22 | 12.7 & 21.4 | 13.96 |
| Film on Glass | no tack | no tack | no tack |
| Film Formation < 5°C, cracking | none | none | crack |

a   Calculated by the Fox equation.
b   Monomers: VA is vinyl acetate; BA is butyl acrylate; VV-10 is a vinyl ester of unsaturated monocarboxylic acid containing 10 carbon atoms; and V2E-H is vinyl 2-ethyl hexanoate.

**Example XIV: Test Results of Vinyl Ester Latexes in Paint Formulations**

Latexes 4A - 4B, and a commercial vinyl acrylic resin coalesced with 6% Texanol, available from Nacan Products Ltd., Canada, were formulated into paint screening formula I and tested for block resistance and low temperature film forming properties. The results are set out in Table 9 and show that the two stage

EP 0 609 756 A2

latexes 4A and 4B are superior in block resistance to the commercial paint formulation containing coalescent and to the paint formulation containing the homogeneous polymer 4D.

**Table 9**
**Composition and Properties of Paint Formulations**
**Containing Vinyl Ester Latexes for Solvent Free Paint**
**(Comparisons of the Test Results)**

| Latex | 4A | 4B | 4C | 4D[a] | 4E[b] |
|---|---|---|---|---|---|
| | 2-stage polymerization | | | | |
| **Semi-Gloss Paint Formula I** Film on Glass | no tack | no tack | no tack | slight tack | no tack |
| Film formation < 5°C, cracking | none | none | cracks | none | none |
| Block Resistance 1 PSI | | | | | |
| 1 day @ RT & 40-60% RH after curing 1 day | 1 | 0 | 2 | 0 | 0 |
| 2 days | 0 | 2 | 3 | 0 | 0 |
| 3 days | 2 | 3 | 4 | 0 | 0 |
| 7 days | 3 | 4 | 6 | 0 | 0 |
| 30 minutes @ 35°C after curing 7 days | 2 | 3 | 5 | 0 | 0 |

[a] Homogeneous polymerization of Latex 4B
[b] Nacan's commercial Vinyl Acrylic Resin coalesced with 6% Texanol

**Example XV: All-Acrylic/Vinyl-Acrylic Terpolymer with Wet Adhesion**

Two soft all-acrylic/hard vinyl-acrylic two-stage terpolymers were prepared using the surfactant system and procedure of Example I. Wet adhesion monomer (DV 2422) in the amount of 0.5% by weight of total polymer was polymerized into the first stage polymer domain. The latexes were designated 5A and 5B. The latex properties and composition are set out in Table 10.

19

Table 10

| Composition and Properties of All Acrylic-Vinyl Acrylic Latexes | | |
|---|---|---|
| **Latex** | **5A** | **5B** |
| **1st stage wt %** | 80.0 | 77.6 |
| Tg ($^\circ$C)[a] | -10.6 | -10.6 |
| Particle Size (nm) | 175 | 185 |
| MMA/BA/DV2422 | 32.4/47.4/1 | 30.6/45.9/1.1 |
| **2nd stage wt %** | 20.2 | 23.5 |
| Tg ($^\circ$C)[a] | -46 | 17.0 |
| Particle size (nm) | 277 | 206 |
| VA/BA | 2.6/17.6 | 20.5/3.0 |
| **Polymer** | | |
| Tg ($^\circ$C) | -17.3 | -5.1 |
| % Solids | 50.3 | 50.0 |
| Particle size (nm) | 227 | 206 |
| DSC Tg ($^\circ$C) | -0.8, 15 & 29.2 | -2.2, 28.8 |
| Film on Glass | slight tack | no tack |
| Film formation < 5$^\circ$C, cracking | none | none |

[a] Calculated by the Fox equation

## Example XVI: Test Results of All-Acrylic/Vinyl-Acrylic Latexes in Paint Formulations

Latexes 5A and 5B were formulated into paint screening formulas I and II and compared for block resistance and low temperature film forming properties to each other and to the commercial formula 4E containing coalescent. The results are set out in Table 11 and show that latex 5B is a superior formulation, and latex 5A is a comparable formulation without coalescent to the commercial paint, which contains coalescing solvent.

Latexes 5A and 5B were formulated into paint screening formulas I and III and compared to a commercial paint containing coalescent (Nacan's Vinyl Acrylic) and the all-acrylic latex 1G formulated with coalescing solvent. The results are set out in Table 12 and show that the two-stage polymers are superior for use in paint formulations.

20

**Table 11**
**Composition and Properties of Paint Formulations**
**All Acrylic-Vinyl Acrylic Latexes**

| Latex | 5A | 5B | 4E[a] |
|---|---|---|---|
| | 2-stage polymerization | | |
| **Semi-Gloss Paint Formula I** Film on Glass | slight tack | no tack | no tack |
| Film formation < 5°C, cracking | none | none | none |
| Block Resistance 1 PSI | | | |
| 1 day @ RT & 40-60% RH after curing 1 day | 0 | 7 | 0 |
| 2 days | 0 | 8 | 0 |
| 3 days | 0 | 7 | 0 |
| 7 days | 0 | 8 | 0 |
| 30 minutes @ 35°C after curing 7 days | 0 | 8 | 0 |
| **Silk Paint Formula II** Film on Glass | slight tack | no tack | no tack |
| Film Formation < 5°C, cracking | none | none | none |
| Block Resistance 1 PSI | | | |
| 1 day at RT & 40-60% RH after curing 1 day | 5 | 6 | |
| 7 days | 5 | 6 | 6 |
| 30 minutes @ 35°C after curing 7 days | 6 | 8 | 6 |

[a] Nacan's Vinyl Acrylic Latex coalesced with 6% Texanol

EP 0 609 756 A2

### Table 12
### Test Results of Paint Formulations

| Latex | 5A | 5B | 4E[a] | 1G[b] |
|---|---|---|---|---|
| | 2-stage polymerization | | | |
| **Semi-Gloss Paint Formula I** | | | | |
| Lava scrub 2.5 days air dried (strokes to failure) | 4116 | 1418 | 720 | 716 |
| Wet Adhesion 3 days air dried (strokes to failure) | 3766 | 2168 | nil | 1588 |
| Gloss (60°C) 24 hours | 42.1 | 47.2 | 45.3 | 30.1 |
| Freeze thaw | 5 cycles | 5 cycles | 5 cycles | 5 cycles |
| **Satin Paint Formula III** | | | | |
| Lava scrub 2.5 days air dried strokes | 1834 | 1038 | 450 | 476 |
| Wet adhesion (strokes to fail) | 3500 | 2246 | nil | 1072 |
| Freeze thaw stability | 5 cycles | 5 cycles | 5 cycles | 5 cycles |

[a] Nacan's Vinyl Acrylic Latex coalesced with 6% Texanol
[b] All Acrylic Latex coalesced with 6% Texanol

The above examples illustrate certain preferred embodiments of this invention, but are not intended to be illustrative of all embodiments.

## Claims

1. A latex paint formulation containing no organic solvents comprising a multistage polymer having at least two polymer domains prepared via a multi-stage emulsion polymerization in which subsequent stage polymerizations occur in the presence of the first and succeeding stage polymer domains and in which one of the polymer domains has a glass transition temperature in the range -5° to -55°C and represents from 90% to 10% by weight of the total polymer, and the other of the polymer domains has a glass transition temperature in the range 0° to +50°C and represents from 10% to 90% by weight of the total polymer.

2. The latex paint formulation according to claim 1 in which the multistage polymer is prepared from monomers selected from the group consisting of the $C_1$-$C_4$ alkyl esters of acrylic and methacrylic acid, ethylene, vinyl halide, vinyl esters of linear and branched $C_1$-$C_{25}$ carboxylic acids, styrene, $C_1$-$C_4$ alkyl and alkoxy substituted styrene, and halogenated styrene.

3. The latex paint formulation according to claim 2 in which the monomers are selected from the group consisting of methyl acrylate, ethyl acrylate, butyl acrylate, 2-ethylhexyl acrylate, decyl acrylate, methyl methacrylate, ethyl methacrylate, vinyl acetate, ethylene, vinyl chloride, and styrene.

4. The latex paint formulation according to claim 2 in which the multistage polymer further comprises in any domain a monomer composition including a wet adhesion monomer, present in an amount of 0.2-2.0% by weight of the total polymer.

5. The latex paint formulation according to claim 4 in which the wet adhesion monomer is selected from the group consisting of aminoethyl acrylate and methacrylate, dimethylaminopropyl acrylate and methacrylate, 3-dimethylamino-2,2-dimethylpropyl-1-acrylate and methacrylate, 2N-morpholinoethylacrylate and methacrylate, 2-N-piperidinoethyl acrylate and methacrylate, N-(3-dimethylaminopropyl) acrylamide and methacrylamide, N-(3-dimethylamino-2, 2-dimethylpropyl) acrylamide and methacrylamide, N-dimethylaminomethyl acrylamide and methacrylamide, N-(4-mor-

22

pholino-methyl) acrylamide and methacrylamide, vinylimidazole, vinylpyrrolidone, N-(2-methacryloyloxyethyl) ethylene urea, N-(2-methacryloxyacetamidoethyl)-N,N'-ethyleneurea, allylalkyl ethylene urea, N-methacrylamidomethyl urea, N-methacryoyl urea, N-[3-(1,3-diazacyclohexan)-2-on-propyl] methyacrylamide, 2-(1-imidazolyl) ethyl methacrylate, 2-(1-imidazolidin-2-on)ethylmethacrylate, N-(methacrylamido)ethyl ethylene urea and allyl ureido.

6. The latex paint formulation according to claim 2 in which the multistage polymer further comprises in any domain a multifunctional crosslinking monomer having two or more polymerizable carbon-carbon double bonds per molecule, present in an amount from 0.01% to 5% by weight of the total polymer.

7. The latex paint formulation according to claim 6 in which the multifunctional crosslinking monomer is selected from the group consisting of vinyl acrylate, vinyl methacrylate, allyl acrylate, allyl methacrylate, vinyl or ally acrylate containing diol functionality, vinyl or allyl methacrylate containing diol functionality, and methylene-bis-acrylamide.

8. The paint formulation according to claim 2 in which any domain of the multistage polymer is further prepared from a carboxylic acid selected from the group consisting of $C_3$ - $C_6$ monocarboxylic acids and $C_4$ - $C_6$ dicarboxylic acids, present in an amount from 0.2% to 4.0% by weight of the total polymer.

9. The latex paint formulation according to claim 1 in which the polymer has an average particle size diameter of less than 350 nanometers.

10. A multistage polymer for use in a latex paint formulation comprising at least two polymer domains prepared via a multi-stage emulsion polymerization in which subsequent stage polymerizations occur in the presence of the first and succeeding stage polymer domains and in which one of the polymer domains has a glass transition temperature in the range -5° to -55°C and represents from 90% to 10% by weight of the total polymer, and the other of the polymer domains has a glass transition temperature in the range 0° to +50°C and represents from 10% to 90% by weight of the total polymer.

11. The multistage polymer according to claim 10 in which the polymer is prepared from monomers selected from the group consisting of the $C_1$-$C_4$ alkyl esters of acrylic and methacrylic acid, ethylene, vinyl halide, vinyl esters of linear and branched $C_1$-$C_{25}$ carboxylic acids, styrene, $C_1$-$C_4$ alkyl and alkoxy substituted styrene, and halogenated styrene.

12. The multistage polymer according to claim 11 in which the monomers are selected from the group consisting of methyl acrylate, ethyl acrylate, butyl acrylate, 2-ethylhexyl acrylate, decyl acrylate, methyl methacrylate, ethyl methacrylate, vinyl acetate, vinyl versatate, ethylene, vinyl chloride, and styrene.

13. The multistage polymer according to claim 10 further comprising in any domain a monomer composition including a wet adhesion monomer, present in an amount of 0.2-2.0% by weight of the total polymer.

14. The multistage polymer according to claim 13 in which the wet adhesion monomer is selected from the group consisting of aminoethyl acrylate and methacrylate, dimethylaminopropyl acrylate and methacrylate, 3-dimethylamino-2,2-dimethylpropyl-1-acrylate and methacrylate, 2-N-morpholinoethylacrylate and methacrylate, 2-N-piperidinoethyl acrylate and methacrylate, N-(3-dimethylaminopropyl) acrylamide and methacrylamide, N-(3-dimethylamino-2, 2-dimethylpropyl) acrylamide and methacrylamide, N-dimethylaminomethyl acrylamide and methacrylamide, N-(4-morpholino-methyl) acrylamide and methacrylamide, vinylimidazole, vinylpyrrolidone, N-(2-methacryloyloxyethyl) ethylene urea, N-(2-methacryloxyacetamidoethyl)-N,N'-ethyleneurea, allylalkyl ethylene urea, N-methacrylamidomethyl urea, N-methacryoyl urea, N-[3-(1,3-diazacyclohexan)-2-on-propyl] methyacrylamide, 2-(1-imidazolyl) ethyl methacrylate, 2-(1-imidazolidin-2-on)ethylmethacrylate, N-(methacrylamido)ethyl ethylene urea and allyl ureido.

15. The multistage polymer according to claim 10 further comprising in any domain a multifunctional crosslinking monomer having two or more polymerizable carbon-carbon double bonds per molecule, present in an amount from 0.01% to 5% by weight of the total polymer.

**16.** The multistage polymer according to claim 15 in which the multifunctional crosslinking monomer is selected from the group consisting of of vinyl acrylate, vinyl methacrylate, allyl acrylate, allyl methacrylate, vinyl or allyl acrylate containing diol functionality, vinyl or allyl methacrylate containing diol functionality, and methylene-bis-acrylamide.

**17.** The multistage polymer according to claim 10 further comprising in any domain a carboxylic acid selected from the group consisting of $C_3$ - $C_6$ monocarboxylic acids and $C_4$ - $C_6$ dicarboxylic acids, present in an amount from 0.2% to 4.0% by weight of the total polymer.

**18.** The multistage polymer according to claim 10 in which the polymer particles have an average particle size diameter of less than 350 nanometers.